# EUROPEAN PATENT SPECIFICATION

(11) **EP 1 808 724 B1**
(45) Date of publication and mention of the grant of the patent: **16.11.2011**
(21) Application number: 05780459.3
(22) Date of filing: 09.08.2005
(51) Int. Cl.: G02C 5/16, G02C 5/00, G02C 5/22

(54) **SPECTACLES FOLDABLE INTO THE SHAPE OF A BOX**
QUADERFÖRMIG ZUSAMMENGELEGTE BRILLE
LUNETTES PLIEES EN FORME DE BOITE

(30) Priority: 01.11.2004 CN 200410086772
(43) Date of publication of application: 18.07.2007
(73) Proprietor: Gao, Yong, Jiefang South Road, Wenzhou Zhejiang 325000 (CN)
(72) Inventor: Gao, Yong, Jiefang South Road, Wenzhou Zhejiang 325000 (CN)
(74) Representative: Gervasi, Gemma
(86) International application number: PCT/CN2005/001219
(87) International publication number: WO 2006/047923

(56) References cited:
- EP-A- 0 426 006
- EP-A- 1 008 888
- CN-A- 1 133 094
- CN-A- 1 462 896
- GB-A- 1 372 417
- JP-A- 11 133 360
- US-A- 5 028 126
- US-A- 6 102 541
- US-B1- 6 257 720
- US-B1- 6 494 573
- US-B1- 6 530 660

## Description

### Field of the Technique

The present invention relates to a kind of spectacle, and more particularly to a spectacle which can be folded into the shape of a box.

### Background

In the case of common eyeglasses, the temple bars are folded inward and then the eyeglasses are put into an eyeglass case to be carried away. That kind of operation is very inconvenient, particularly for elderly folks who use bi-focal eyeglasses and need to put on and take off the bi-focal eyeglasses frequently.

The patents US6102541 and EP1008888 show spectacles comprising a frame defining a surface and two temples that can be folded into a box-shaped fashion. Each of said temples defines a shell-shape adapted to contain the entire width of the surface defined by the frame and the connection mechanism connecting each temple to the frame is adapted to rotate the temple so that said surface slips into the shell from the front side or back side.

### Summary of the Invention

This invention overcomes the shortcomings of the current technology by providing eyeglasses that can be folded to form a case which is easy to use.

To achieve the above-mentioned goals, a spectacle folded into the shape of a box of the present invention comprises a pair of frames and a pair of temples, the temples are able to be folded towards the position of the frames, and the temples have a hollow section in the form of a box, thereby the frames are protected by the fold of the temples in the hollow section.

The rotating connection mechanism has a rotation mechanism which has a stop location at a set angle, and the mechanism possesses a tension force when the temples are folded which makes the temples pulled towards the position of the frame.

A spectacle folded into the shape of a box of the present invention can be folded into the shape of a box when it is not in use, and the frames are housed inside by the temple. Therefore, the lenses and the frames themselves are protected effectively. Unlike current spectacles in old style, it need not be taken out of the box when wearing. Therefore, it is very convenient, especially for elderly people who use spectacles which are made in this way. The temples can be designed diversely. The temples can be made not only in small and exquisite style, but also in solid and superb style. The hollow section which houses the frames can be increased or reduced.

### Brief description of the drawings

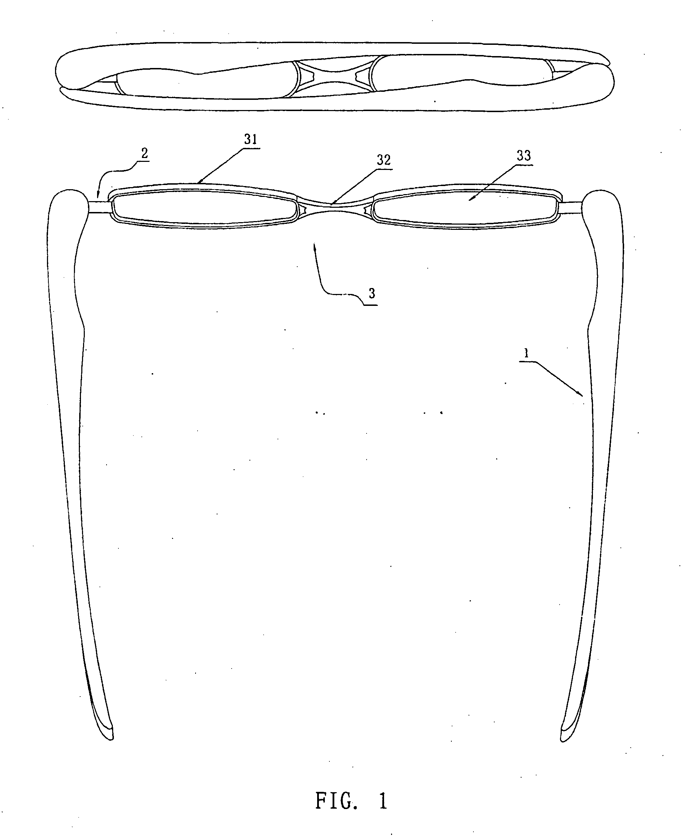

FIG.1 is an integral illustration of the first embodiment of the present invention;

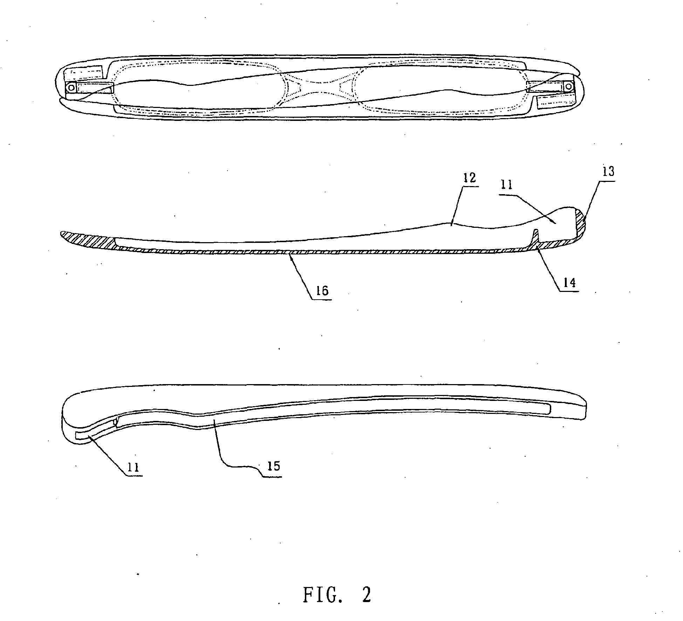

FIG.2 is sectional and perspective view of the temples of the first embodiment of the present invention;

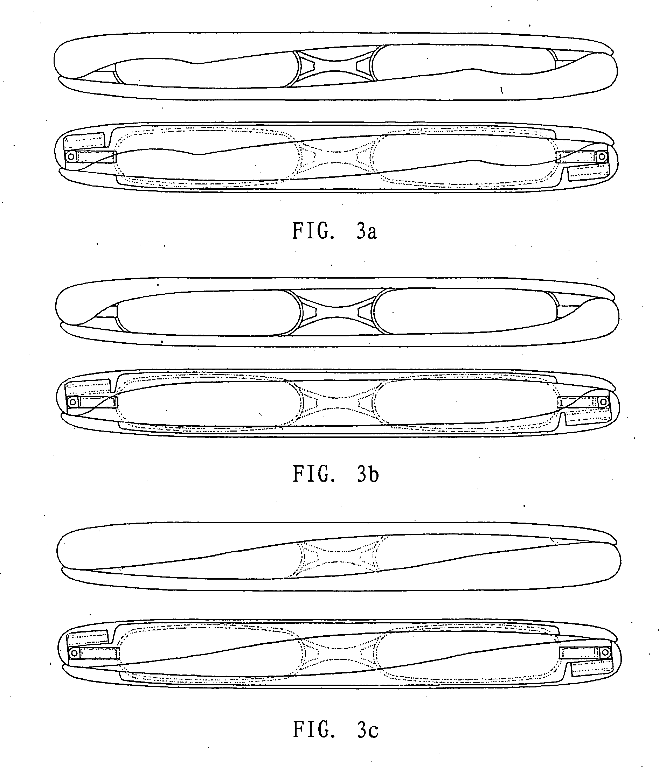

FIG. 3a, 3b, 3c are respectively three different shaped illustrations of the temples of the present invention;

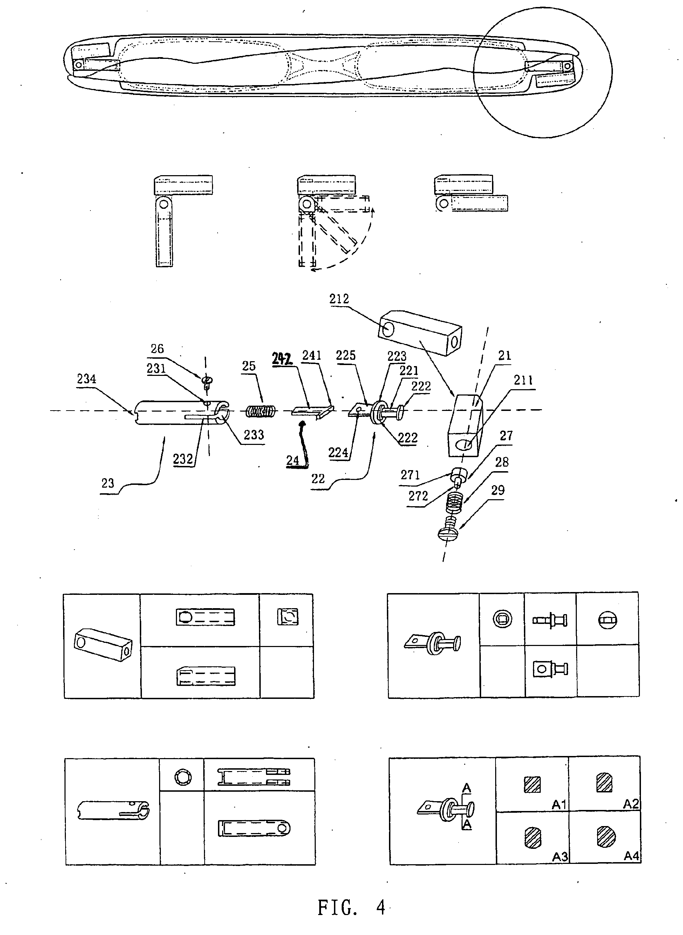

FIG. 4 is the structure schematic view and integral perspective view of the rotating connection mechanism of the first embodiment of the present invention;

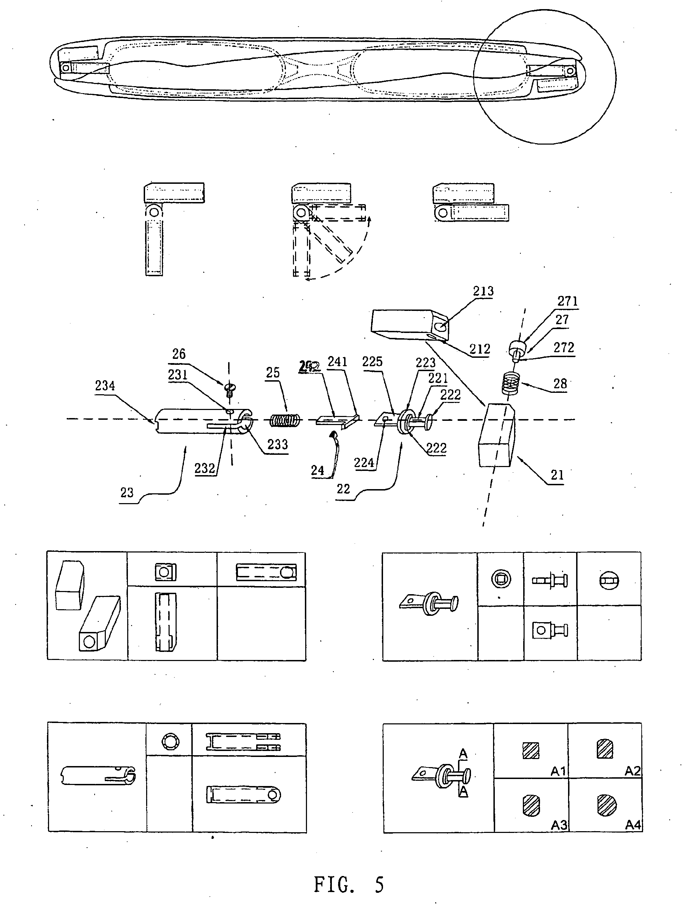

FIG. 5 is the structure schematic view and integral perspective view of the rotating connection mechanism of the second embodiment of the present invention;

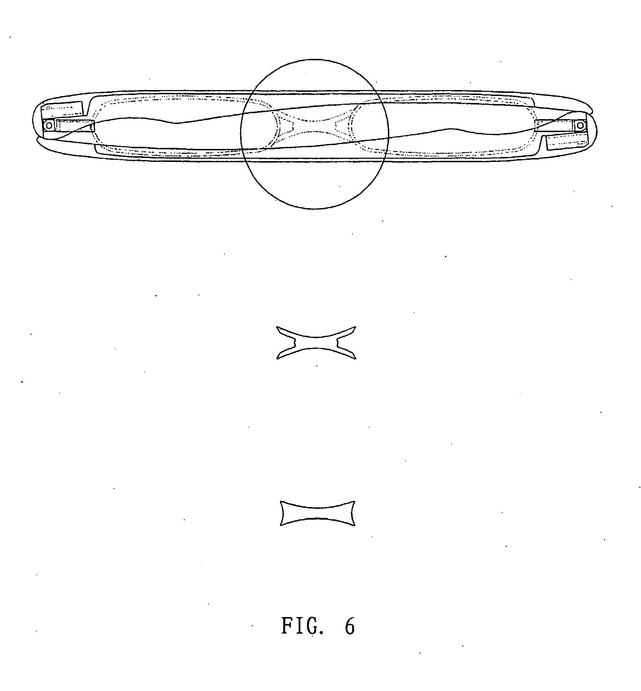

FIG. 6 is two different shape views of the bridges of frames of the present invention; FIG. 7-FIG. 11 are use process views of spectacle opening, rotating and folding of embodiments of the present invention;
FIG. 12 is a sectional schematic view of one end of the rotating connection mechanism of the first embodiment of the present invention rotating about the locating hole 224 which is on the rotating connection shaft 22.
FIG. 13 is a sectional schematic view of the other end of the rotating connection mechanism of the first embodiment of the present invention rotating in the hole 212 of the structure 21.

### Detailed Description of the Embodiments

With reference to the drawings, concrete embodiments of the present invention will be described in detail.

### Embodiment 1

The spectacle of the present invention, which can be folded into the shape of a box, comprises a pair of temples 1, a pair of rotating connection mechanisms 2, and a pair of frames 3. The temple 1 is provided with a side wall 12 in its body and a through-carved portion 11 in its front end. The side wall 12 and wall 16 of the temple 1 form the through-carved portion 15 of its body, and the through-carved portion 11 is complementary in shape to the first structure 21 of the rotating connection mechanism 2. The first structure 21 is close combined to temple 1; the temple 1 is provided with locating portions 13 and 14 for the locating structure 21 on its front end. The through-carved portion 15 on the body is connected to through-carved portion 11, and the frames 3 are connected to temples 1 by rotating connection mechanism 2, and housed in the through-carved portion 15 of the body of temple 1 after being folded.

The rotating connection mechanism 2 is provided with a first, structure 21, a rotating connection shaft 22, a second structure 23, a jacking block 24, a first spring 25, a first screw 26, a jacking pole 27, a second spring 28 a second screw 29. The first structure 21 has first hole 211 and second hole 212 whose central axial lines are coplanar. The inner diameter of the second hole 212 is equal to the outer diameter of the first rotating block 222 which is provided on rotating connection shaft 22. The rotating connection shaft 22 is fitted tightly with the first structure 21 after it is fitted into the second hole 212, and rotates in the second hole 212. The diameter of the first hole 211 is fitted tightly with the outer diameter of the screw mandrel of the second screw 29. The front portion of the jacking pole 27 is a big column 271, and the rear portion is a small column 272.

After one side of the rotating block of the rotating connection shaft 22 is fitted into the second hole 212 of the first structure 21, the jacking pole 27 is fitted into the first hole 211 of the first structure 221. Then the front big column 271 of the jacking pole 27 is against the second rotating block 21 which has shapes such as A1, A2, A3, A4 and so on of the rotating connection shaft 22. The distance along the diagonal of the second rotating block 221 is less than the outer diameter of the first rotating block 222. Second spring 28 sleeve the small column 272 of the jacking pole 27 after it is fitted into the first hole 211 of the structure 21, then the second screw 29 is locked on. The deformation of the spring is used to form the rotating force which rotates the rotating connection shaft 22 and the initial pre-tightening force which is needed when the rotating connection shaft 22 is extracted from the second hole 212 of the first structure 21.

The rotating connection shaft 22 also has round block 223 and third rotating block 225, and a locating hole 224 is provided in the third rotating block 225. Meanwhile, one end of the second structure 23 is provided with a combination groove 234 which is connected with frame 3. The other end is provided with a hole 233 and a through groove 232 whose central plante is the same as that of the combination groove 234. A locating hole 231 is provided in the second structure 23 along the central line which is vertical to the plane of the through groove 232 on the same side as the through groove 232. When the first spring 25 is fitted into the hole 233, the jacking block 24 is fitted into the hole 233, and then the portion 242 of the jacking block 24 is inserted into the tube of the first spring 25. A locating block 241 which can slide transversely in the through groove 232 is provided on the other end of the jacking block 24. When the jacking block 24, is pressed towards the first spring, one end of the rotating connection shaft 22 at which the third rotating block 225 is located is fitted into the through groove 232 of the second structure 23. The second structure 23 is combined with rotating connection shaft 22 with first screw 26 inserted through the locating holes 231 and 224. At the same time, the deformation of the first spring 25 forms the initial pre-tightening force and the stop force which fit jacking block 24, spring 25, first screw 26 and the second structure 23 together and make the whole rotate around the locating hole 224.

Frame 3 comprises lens frames 31, bridge 32 and lenses 33, and the frame 3 is connected to temples 1 and housed in the hollow section which is provided by temples 1 folded inward through rotating connection mechanism 2.

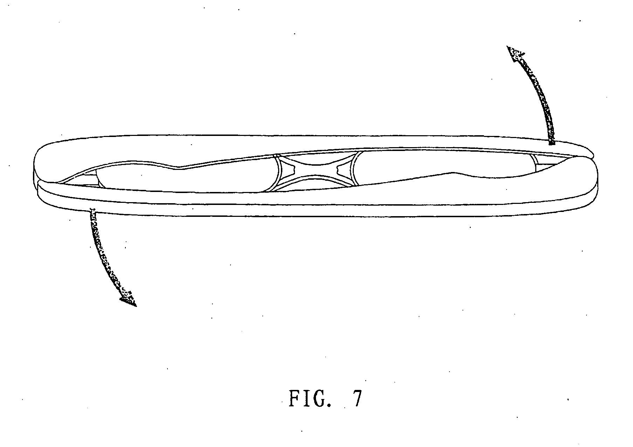

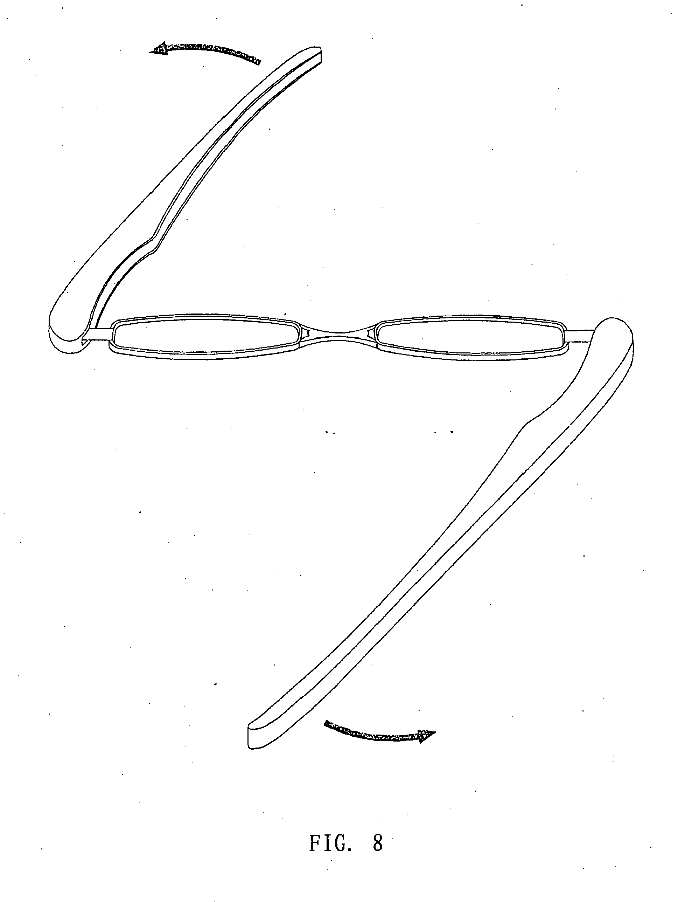

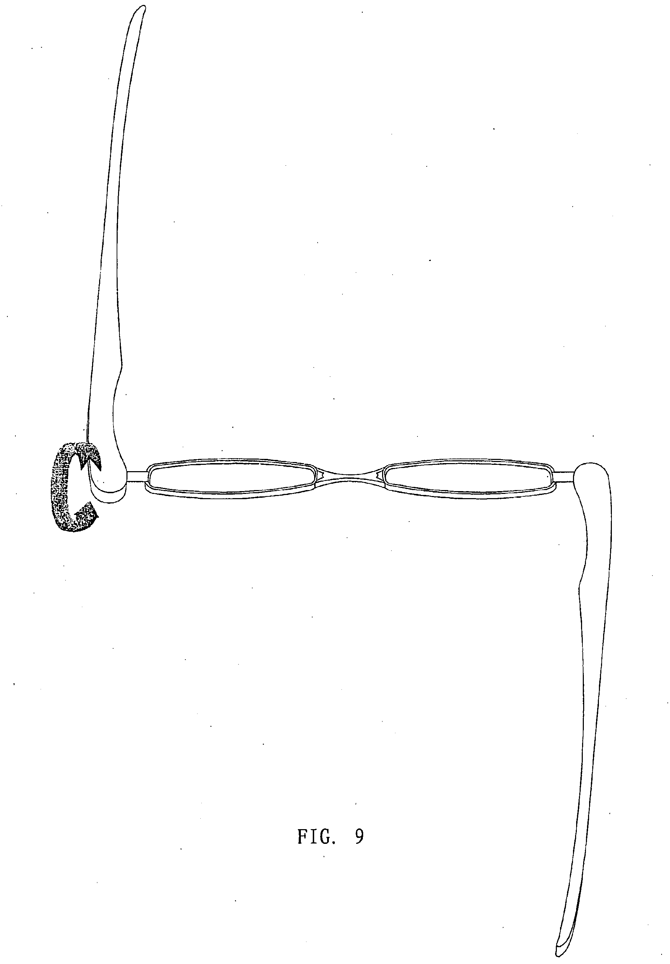

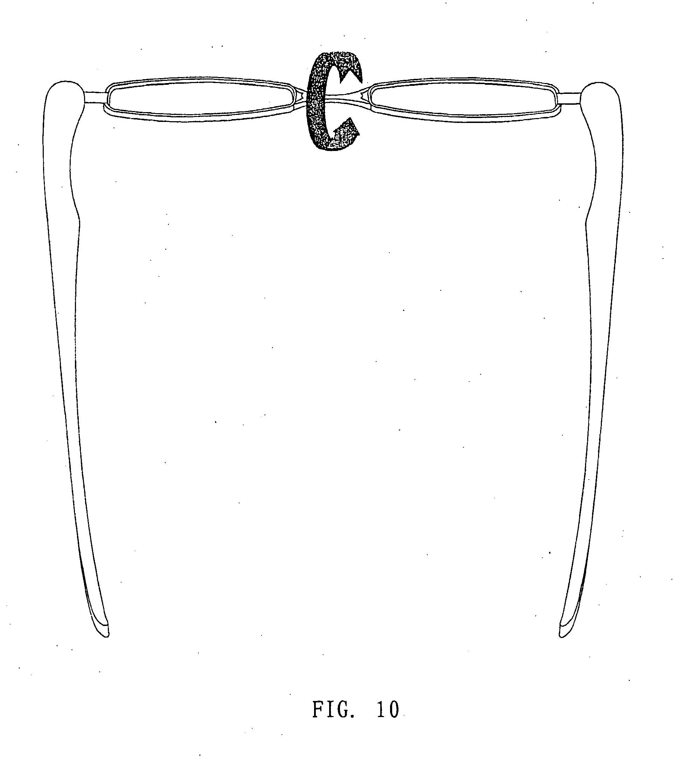

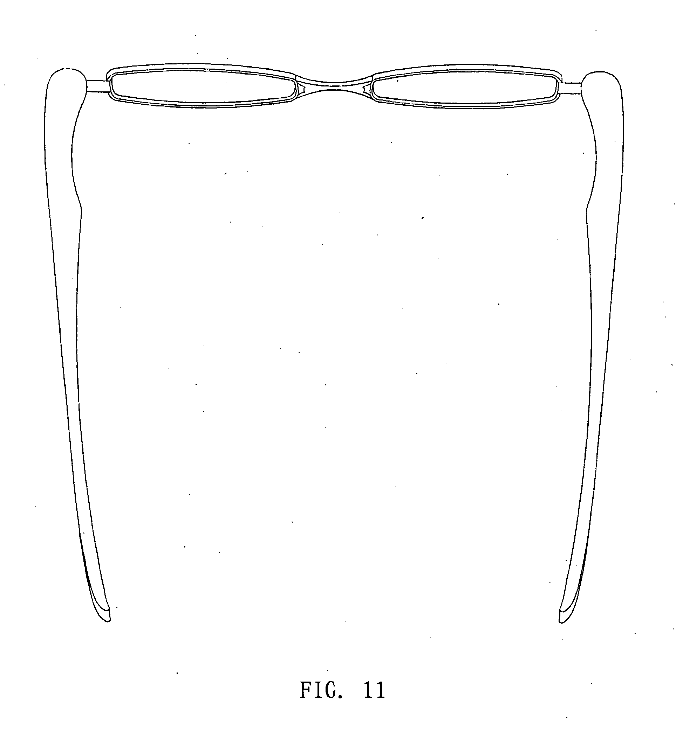

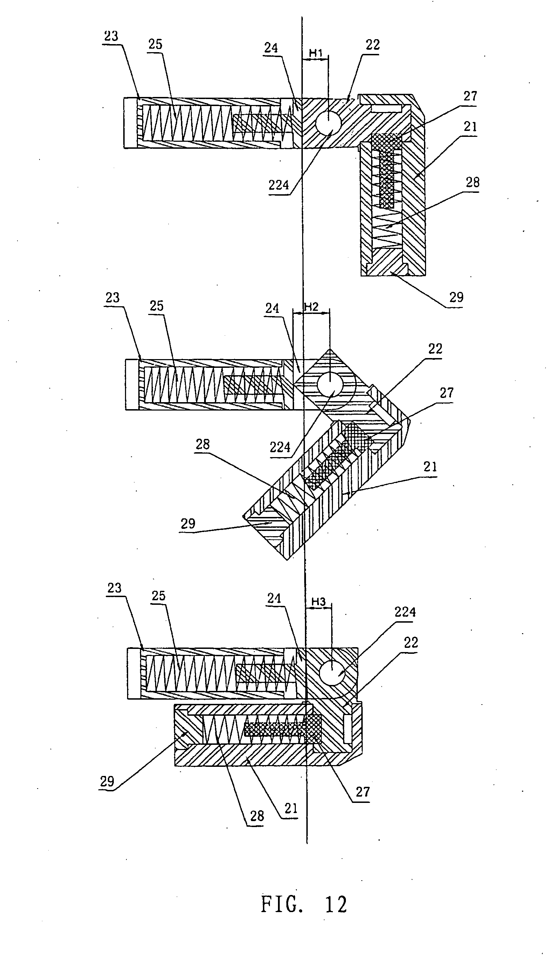

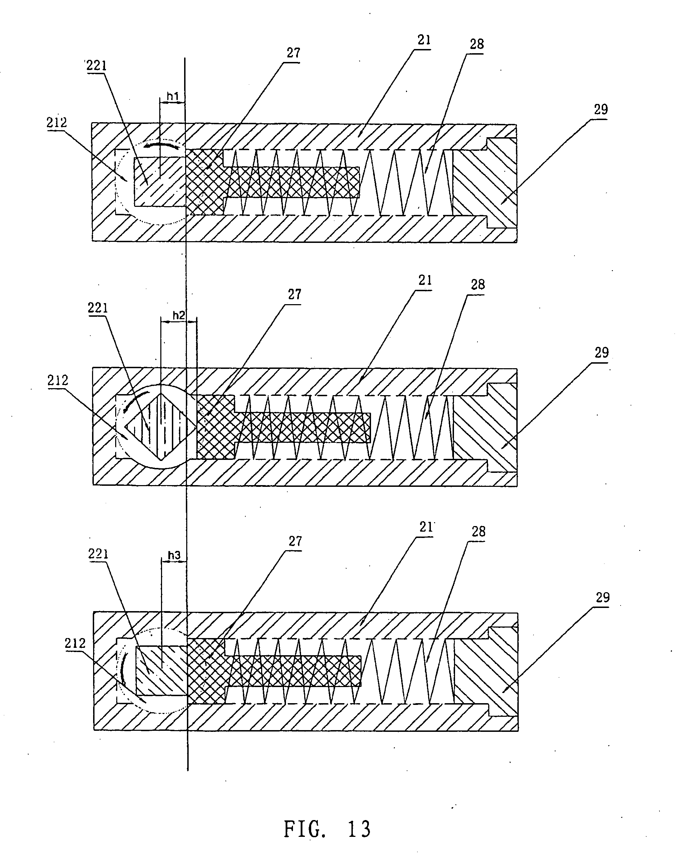

According to above-described structure, the states of the spectacle during wearing are shown in FIG. 7-13. First, the left temple is rotated forward, and the right temple is rotated backward, as shown in FIG. 8. Both temples are rotated to the stop locations of the structure 2 (the angle to the frame is close to 90°; temples can only be rotated in the range of 90° or less), as shown in FIG. 9. The left temple is then rotated 180° to the same side of the right temple, and then the frame is rotated 90°. Now the spectacles can be worn. Vice versa, when the spectacles are folded in the opposite step, the frame is housed in the hollow section formed by both temples, and the frame and lenses can be protected like in a box. The spectacles whose appearance is like an integrated box are portable with convenience.

The spectacle folded into the shape of a box is able to be worn no matter whether the frame is rotated 90° forward or backward, that is to say, the only thing necessary is that the plane of the lens frame is vertical to the plane formed by both temples.

### Embodiment 2

The spectacle of the present invention, which can be folded into the shape of a box, comprises a pair of temples 1, a pair of rotating connection mechanisms 2, and a pair of frames 3. The temple 1 is provided with a side wall 12 in its body and a through-carved portion 11 in its front end and the side walls 12 and 16 of the temple 1 form the through-carved portion 15 in the body. Through-carved portion 11 is complementary in shape to the first structure 21 of the rotating connection mechanism 2. The first structure 21 is close combined to temple / T 1. The temple 1 is provided with locating portions 13 and 14 of the locating first structure 21 on its front end. The through-carved portion 15 of the body is connected to through-carved portion 11. The frames 3 are connected to temples 1 through rotating connection mechanism 2, and housed in the through-carved portion 15 of the body of temple 1 after being folded.

The rotating connection mechanism 2 is provided with a first structure 21, a rotating connection shaft 22, a structure 23, a jacking block 24, a first spring 25, a first screw 26, a jacking pole 27, and a second spring 28. The first structure 21 is provided with first hole 213 and second hole 212 whose central axial lines are coplanar. The inner diameter of the second hole 212 is equal to the outer diameter of the first rotating block 222 which is provided on rotating connection shaft 22. The rotating connection shaft 22 is fitted tightly with the first structure 21 after it is fitted into the second hole 212, and rotates in the second hole 212. The front portion of the jacking pole 27 is a big column 271, and the rear portion is a small column 272.

Second spring 28 is fitted into the first hole 213 of the first structure 21. The small column 272 of the jacking pole 27 is then inserted into the tube of the second spring 28.When the jacking pole 27 is pressed, one side of the first rotating block 222 of the rotating connection shaft 22 is fitted into the second hole 212 of the first structure 21, the front big column 271 of the jacking pole 27 is against the second rotating block 221 which has shapes of A1, A2, A3, A4 and so on of the rotating connection shaft 22. The deformation of the second spring 28 caused by pressing produces the rotating force which rotates the rotating connection shaft 22 and the initial pre-tightening force which is needed when the rotating connection shaft 22 is extracted from the second hole 212 of the first structure 21. Rotating block 221 becomes the stop location /2 at which the jacking pole 27 and second spring 28 are sprung from the first hole 213 because of the initial spring force.

The rotating connection shaft 22 also has round block 223 and third rotating block 225, and a locating hole 224 is provided in the third rotating block 225. One end of the second structure 23 is provided with a combination groove 234 which is integrated with frame 3. The other end is provided with a hole 233 and a through groove 232 whose central plane is the same as that of the combination groove 234. A locating hole 231 is provided in the second structure 23 along the central line which is vertical to the plane of the through groove 232 on the same side of the through groove 232. When first spring 25 is fitted into the hole 233, the jacking block 24 is fitted into the hole 233, and then the portion 242 of the jacking block 24 is inserted into the tube of the first spring 25. A locating block 241 which can slide transversely in the through groove 232 is provided on the other end of the jacking block 24. When the jacking block 24 is pressed towards the first spring, one end of the third rotating block 225 of the rotating connection shaft 22 is fitted into the through groove 232 of the second structure 23. The second structure 23 is combined with rotating connection shaft 22 with first screw 26 inserted through the locating holes 231, and 224. At the same time, the deformation of the first spring 25 forms the initial pre-tightening force and the stop force which fit jacking block 24, first spring 25, first screw 26 and the second structure 23 together and make the whole rotate around the locating hole 224.

Frame 3 comprises lens frames 31, bridge 32 and lenses 33. Frame 3 is connected to temples 1 and housed in the hollow section which is formed by temples 1 folded inward through rotating connection mechanism 2. Therefore, frame and lenses can be protected like in a box. The spectacles whose appearance is like an integrated box are portable with convenience.

## Claims

1. Spectacles that can be folded into the shape of a box, comprising a frame (3), a pair of temples (1) and a pair of rotating connection mechanisms (2) connecting the temples (1) to the frame (3), wherein the temples (1) comprises through-carved portions (15, 11) **characterised in that** said mechanisms rotate the temples in such a way that the frame (3) slips into said through-carved portions (15,11) in on-edge fashion, whereby the up and down side of the frame is protected by the temples.

2. Spectacles that can be folded into the shape of a box according to claim 1, wherein when folded, the temples (1) form a hollow section in which the frame (3) is protected.

3. Spectacles that can be folded into the shape of a box according to claim 2, wherein each temple (1) has a side wall (12) in its body and a through-carved portion (11) in its front end, a main through-carved portion (15) of the body is formed by the side wall (12) and inside wall (16) of the temple (1), the through-carved portion (11) being complementary in shape to a structure (21) of the rotating connection mechanism (2), and wherein said structure (21) is housed in the through-carved portion (11) of the temple (1), locating portions (13,14) for said structure (21) are provided in the front end of the temple (1), and wherein the main through-carved portion (15) of the temple (1) is connected to the through-carved portion (11), and frame (3) is housed in the main through-carved portion (15) of the temple (1) upon folding of the temple, both walls becoming protection walls of the frame (3).

4. Spectacles that can be folded into the shape of a box according to claim 2, wherein the rotating connection mechanism (2) has a first structure (21), a rotating connection shaft (22), a second structure (23), a jacking block (24), a first spring (25), a first screw (26), a jacking pole (27), a second spring (28) and a second screw (29), the first spring (25) and the jacking block (24) are fitted into a hollow section of the second structure (23) in turn to press the first spring (25), a side of the rotating connection shaft (22) on which a third rotating block (225) is located is fitted into a through groove (232) of the second structure (23) said first screw (26) is inserted through a locating hole (231) of the second structure (23) and a locating hole (224) of the rotating connection shaft (22), said first screw (26) making the rotating connection shaft (22), the second structure (23), the jacking block (24) and the first spring (25) combined together, and wherein a first rotating block (222) on the other side of the rotating connection shaft (22) is fitted into a second hole (212) of the first structure, a front big column (271) of the jacking pole (27) is fitted into a first hole (211) of the first structure (21) and against a second rotating block (221) of the rotating connection shaft (22), the second spring (28) and the second screw (29) are inserted, and the rotating connection mechanism (2) becomes whole.

5. Spectacles that can be folded into the shape of a box according to claims 2 and 4, wherein the central axial lines of said first hole (211) and said second hole (212) are coplanar, the diameter of the first hole (211) is fitted tightly with the outer diameter of the screw mandrel of the second screw (29), a front portion of the jacking pole (27) is said front big column (271) and a rear portion of the jacking pole (27) is a small column (272), and wherein when one side of the first rotating block (222) of the rotating connection shaft (22) is fitted into the second hole (212) of the first structure (21) and the jacking pole (27) is fitted into the first hole (211, 213) of the first structure (21), the front big column (271) of the jacking pole (27) is then against a second rotating block (221), a distance along the diagonal of the second rotating block (221) being less than an outer diameter of the first rotating block (222), and wherein the second spring (28) sleeves the small column (272) of the jacking pole (27) when fitted into the first hole (211) of the first structure (21), the second screw (29) is locked on, and the deformation of the second spring is used to form the rotating force which rotates the rotating connection shaft (22) and the initial pre-tightening force which is needed when the rotating connection shaft (22) is extracted from the second hole (212) of the first structure (21).

6. Spectacles that can be folded into the shape of a box according to claims 2 and 4, wherein an outer diameter of the first rotating block (222) is equal to a diameter of the second hole (212), the rotating connection shaft (22) is fitted tightly with the first structure (21) after being fitted into the second hole (212), and rotates in the second hole (212) around the center of the first rotating block (222) the rotating connection shaft (22) also has a round block (223) said locating hole (224) is provided in the third rotating block (225), when the jacking block (24), the first spring (25), the first screw (26) and the second structure (23) are fitted together, they pivot around the locating hole (224)

7. Spectacles that can be folded into the shape of a box according to claims 2 and 4, wherein one end of the second structure (23) is provided with a combination groove (234) which is connected to the frame (3), the other end is provided with a hole (233) and said through groove (232) whose central plane is the same as that of the combination groove (234), said locating hole (231) is provided in the second structure (23) along the central line which is vertical to the plane of the through groove (232) and on the same side as the through groove (232), and wherein the first spring (25) is fitted into the hole (233), the jacking block (24) is fitted into the hole (233), a portion (242) of one end of the jacking block (24) is inserted into the tube of the first spring (25), and a locating block (241) which can slide transversely in the through groove (232) is provided on the other end of the jacking block (24), and wherein when the jacking block (24) is pressed towards the first spring, the end of the rotating connection shaft (22) which has the third rotating block (225) is fitted into the through groove (232) of the second structure (23), the second structure (23) is combined with rotating the connection shaft (22) with said first screw (26) inserted through the locating holes (231, 224), and at the same time, the deformation of the first spring (25) forms the initial pre-tightening force and the stop force which fit the jacking block (24), the first spring (25), the first screw (26) and the second structure (23) together and make the whole rotate around the locating hole (224).

8. Spectacles that can be folded into the shape of a box according to claims 2 and 4, wherein the first structure (21) of the rotating connection mechanism (2) has first hole (213), the second spring (28) is fitted into the first hole (213) of the first structure (21), a small column (272) of the jacking pole (27) is then inserted into the tube of the second spring (28), and when the jacking pole (27) is pressed downwards, the side of the rotating connection shaft (22) which has the first rotating block (222) is fitted into the second hole (212) of the first structure (21), the front big column (271) of the jacking pole (27) is against the second rotating block (221), and the deformation of the second spring (28) caused by pressing produces the rotating force which rotates the rotating connection shaft (22) and the initial pre-tightening force which is needed when the rotating connection shaft (22) is extracted from the second hole (212) of the first structure (21), wherein the second rotating block (221) becomes the stop location at which the jacking pole (27) and the second spring (28) are sprung from the first hole (213) because of the initial spring force.

9. Spectacles that can be folded into the shape of a box according to claim 2, wherein the frame (3) comprises frames (31), a bridge (32) and lenses (33).

10. Spectacles that can be folded into the shape of a box according to claim 2, wherein the rotating connection mechanism (2) has a stop location at a set angle, when the temples are folded, the mechanism possessing the tension force which makes the temples pulled towards the position of the frame.

## Patentansprüche

1. Brille, die zur Form eines Etuiszusammengeklappt werden kann, wobei die Brille ein Gestell (3), ein Paar Bügel (1) und ein PaarDrehverbindungsmechanismen (2), die die Bügel (1) mit dem Gestell (3) verbinden, umfasst, wobei die Bügel (1) eingeschnittene Abschnitte (15, 11) umfassen, **dadurch gekennzeichnet, dass** die genannten Mechanismen die Bügel in der Weise drehen, dass das Gestell (3) hochkant in die genannteneingeschnittenen Abschnitte (15, 11) gleitet, wodurch die Ober-und die Unterseite des Gestells durch die Bügel geschützt sind.

2. Brille, die zur Form eines Etuiszusammengeklappt werden kann, gemäß Anspruch 1, bei der, wenn sie zusammengeklappt ist, die Bügel (1) einen hohlen Abschnitt bilden, in dem das Gestell (3) geschützt ist.

3. Brille, die zur Form eines Etuiszusammengeklappt werden kann, gemäß Anspruch 2, bei der jeder Bügel (1) in seinem Körper eine Seitenwand (12) und in seinem vorderen Ende einen eingeschnittenen Abschnitt (11) aufweist, wobei durch die Seitenwand (12) und durch die Innenwand (16) des Bügels (1) ein eingeschnittener Hauptabschnitt (15) des Körpers ausgebildet ist, wobei die Form des eingeschnittenen Abschnitts (11) komplementär zu einer Struktur (21) des Drehverbindungsmechanismus (2) ist, und wobei die genannte Struktur (21) in dem eingeschnittenen Abschnitt (11) des Bügels (1) aufgenommen ist, wobei in dem vorderen Ende des Bügels (1) Arretierabschnitte (13, 14) für die genannte Struktur (21) vorgesehen sind, und wobei der eingeschnittene Hauptabschnitt (15) des Bügels (1) mit dem eingeschnittenen Abschnitt (11) verbunden ist und wobei das Gestell (3) beim Zusammenklappen des Bügels in dem eingeschnittenen Hauptabschnitt (15) des Bügels (1) aufgenommen wird, wobei beide Wände zu Schutzwänden des Gestells (3) werden.

4. Brille, die zur Form eines Etuiszusammengeklappt werden kann, gemäß Anspruch 2, bei der der Drehverbindungsmechanismus (2) eine erste Struktur (21), eine Drehverbindungswelle (22), eine zweite Struktur (23), einen Abdrückblock (24), eine erste Feder (25), eine erste Schraube (26), eine Abdrückstange (27), eine zweite Feder (28) und eine zweite Schraube (29) aufweist, wobei die erste Feder (25) und der Abdrückblock (24) in einen hohlen Abschnitt der zweiten Struktur (23) eingepasst sind, um wiederum die erste Feder (25) zu drücken, wobei eine Seite der Drehverbindungswelle (22), auf der sich ein dritter Drehblock (225) befindet, in eine Durchgangsnut (232) der zweiten Struktur (23) eingepasst ist, wobei die genannte erste Schraube (26) durch ein Aufnahmeloch (231) der zweiten Struktur (23) und durch ein Aufnahmeloch (224) der Drehverbindungswelle (22) eingeführt ist, wobei die genannte erste Schraube (26) veranlasst, dass die Drehverbindungswelle (22), die zweite Struktur (23), der Abdrückblock (24) und die erste Feder (25) miteinander kombiniert sind, und wobei ein ersterDrehblock (222) auf der anderen Seite der Drehverbindungswelle (22) in ein zweites Loch (212) der ersten Struktur eingepasst ist, wobei eine vordere große Säule (271) der Abdrückstange (27) in ein erstes Loch (211) der ersten Struktur (21) und gegen einen zweiten Drehblock (221) der Drehverbindungswelle (22), die zweite Feder (28) und die zweite Schraube (29) eingepasst ist, wobei der Drehverbindungsmechanismus (2) zu einem Ganzen wird.

5. Brille, die zur Form eines Etuiszusammengeklappt werden kann, gemäß Anspruch 2 und 4, wobei die axialen Mittellinien des genannten ersten Lochs (211) und des genannten zweiten Lochs (212) koplanar sind, wobei der Durchmesser des ersten Lochs (211) an den Außendurchmesser des Gewindedorns der zweiten Schraube (29) eng angepasst ist, wobei ein vorderer Abschnitt der Abdrückstange (27) die genanntevordere große Säule (271) ist und ein hinterer Abschnitt der Abdrückstange (27) eine kleine Säule (272) ist, und wobei, wenn eine Seite des ersten Drehblocks (222) der Drehverbindungswelle (22) in das zweite Loch (212) der ersten Struktur (21) eingepasst ist und die Abdrückstange (27) in das erste Loch (211, 213) der ersten Struktur (21) eingepasst ist, die vordere große Säule (271) der Abdrückstange (27) gegen einen zweiten Drehblock (221) anliegt, wobei eine Entfernung längs der Diagonalen des zweiten Drehblocks (221) kleiner als ein Außendurchmesser des ersten Drehblocks (222) ist, und wobei die zweite Feder (28) die kleine Säule (272) der Abdrückstange (27), wenn sie in das erste Loch (211) der ersten Struktur (21), mit der die zweite Schraube (29) gekoppelt ist,eingepasst ist, umhüllt, und die Verformung der zweiten Feder zum Erzeugen der Drehkraft, die die Drehverbindungswelle (22) dreht, und derAnfangsvorspannkraft, die notwendig ist, wenn die Drehverbindungswelle (22) aus dem zweiten Loch (212) der ersten Struktur (21) herausgezogen wird, verwendet wird.

6. Brille, die zur Form eines Etuiszusammengeklappt werden kann, gemäß Anspruch 2 und 4, wobei ein Außendurchmesser des ersten Drehblocks (222) gleich einem Durchmesser des zweiten Lochs (212) ist, wobei die Drehverbindungswelle (22) eng in die erste Struktur (21) eingepasst ist, nachdem sie in das zweite Loch (212) eingepasst worden ist, und sich in dem zweiten Loch (212) dreht, wobei die Drehverbindungswelle (22) ebenfalls einen runden Block (223) aufweist, wobei das genannte Arretierungsloch (224) in dem dritten Drehblock (225) vorgesehen ist, wobei der Abdrückblock (24), die erste Feder (25), die erste Schraube (26) und die zweite Struktur (23) um das Aufnahmeloch (224) schwenken, wenn sie zusammengebaut sind.

7. Brille, die zur Form eines Etuiszusammengeklappt werden kann, gemäß Anspruch 2 und 4, wobei ein Ende der zweiten Struktur (23) mit einer Kombinationsnut (234) versehen ist, die mit dem Gestell (3) verbunden ist, wobei das andere Ende mit einem Loch (223) und mit der genannten Durchgangsnut (232), deren Mittelebene dieselbe wie die der Kombinationsnut (234) ist, versehen ist, wobei das genannteAufnahmeloch (231) in der zweiten Struktur (23) entlang der Mittellinie vorgesehen ist, die vertikal zu der Ebene der Durchgangsnut (232) und auf derselben Seite wie die Durchgangsnut (232) ist, und wobei die erste Feder (25) in das Loch (233) eingepasst ist, wobei der Abdrückblock (24) in das Loch (233) eingepasst ist, wobei ein Abschnitt (242) eines Endes des Abdrückblocks (24) in das Rohr der ersten Feder (25) eingeführt ist und ein Aufnahmeblock (241), der quer in der Durchgangsnut (232) gleiten kann, an dem anderen Ende des Abdrückblocks (24) vorgesehen ist, und wobei, wenn der Abdrückblock (24) in Richtung der ersten Feder gedrückt wird, das Ende der Drehverbindungswelle (22), das den dritten Drehblock (225) aufweist, in die Durchgangsnut (232) der zweiten Struktur (23) eingepasst wird, wobei sich die zweite Struktur (23) mit der Verbindungswelle (22) mit der durch die Aufnahmelöcher (231, 224) eingeführten genannten ersten Schraube (26) gemeinsam dreht, und wobei die Verformung der ersten Feder (25) gleichzeitig die Anfangsvorspannkraft und die Anschlagkraft erzeugt, die den Abdrückblock (24), die erste Feder (25), die erste Schraube (26) und die zweite Struktur (23) zusammenfügen und veranlassen, dass sich das Ganze um das Aufnahmeloch (224) dreht.

8. Brille, die zur Form eines Etuiszusammengeklappt werden kann, gemäß Anspruch 2 und 4, bei der die erste Struktur (21) des Drehverbindungsmechanismus (2) ein erstes Loch (213) aufweist, wobei die zweite Feder (28) in das erste Loch (213) der ersten Struktur (21) eingepasst ist, wobei daraufhin eine kleine Säule (272) der Abdrückstange (27) in das Rohr der zweiten Feder (28) eingefügt ist, und wenn die Abdrückstange (27) nach unten gedrückt wird, diejenige Seite der Drehverbindungswelle (22), die den ersten Drehblock (222) aufweist, in das zweite Loch (212) der ersten Struktur (21) eingepasst wird, wobei die vordere große Säule (271) der Abdrückstange (27) gegen den zweiten Drehblock (221) anliegt, und die durch Drücken verursachte Verformung der zweiten Feder (28) die Drehkraft, die die Drehverbindungswelle (22) dreht, und die Anfangsvorspannkraft, die notwendig ist, wenn die Drehverbindungswelle (22) aus dem zweiten Loch (212) der ersten Struktur (21) entnommen wird, erzeugt, wobei der zweite Drehblock (221) zu dem Anschlagort wird, bei dem die Abdrückstange (27) und die zweite Feder (28) wegen der Anfangsfederkraft aus dem ersten Loch (213) gefedert sind.

9. Brille, die zur Form eines Etuiszusammengeklappt werden kann, gemäß Anspruch 2, bei der das Gestell (3) Fassungen (31), einen Steg (32) und Linsen (33) umfasst.

10. Brille, die zur Form eines Etuiszusammengeklappt werden kann, gemäß Anspruch 2, bei der der Drehverbindungsmechanismus (2) einen Anschlagabschnitt bei einem Sollwinkel aufweist, wobei, wenn die Bügel zusammengeklappt werden, der Mechanismus die Zugkraft besitzt, die veranlasst, dass die Bügel in Richtung der Position des Gestells gezogen werden.

## Revendications

1. Lunettes qui peuvent être pliées en forme de boîte, comprenant une monture (3), une paire de branches (1) et une paire de mécanismes de raccordement rotatifs (2) raccordant la branche (1) à la monture (3), dans lesquelles les branches (1) comprennent des parties ciselées (15, 11), **caractérisées en ce que** lesdits mécanismes font tourner les branches de sorte que la monture (3) glisse dans lesdites parties ciselées (15, 11) d'une manière verticale, moyennant quoi le côté vertical de la monture est protégé par les branches.

2. Lunettes qui peuvent être pliées en forme de boîte selon la revendication 1, dans lesquelles lorsqu'elles sont pliées, les branches (1) forment une section creuse dans laquelle la monture (3) est protégée.

3. Lunettes qui peuvent être pliées en forme de boîte selon la revendication 2, dans lesquelles chaque branche (1) a une paroi latérale (12) dans son corps et une partie ciselée (11) dans son extrémité avant, une partie principale ciselée (15) du corps est formée par la paroi latérale (12) et la paroi intérieure (16) de la branche (1), la partie ciselée (11) étant complémentaire du point de vue de la forme d'une structure (21) du mécanisme de raccordement rotatif (2), et dans lesquelles la structure (21) est logée dans la partie ciselée (11) de la branche (1), des parties de positionnement (13, 14) pour ladite structure (21) sont prévues dans l'extrémité avant de la branche (1), et dans lesquelles la partie ciselée principale (15) de la branche (1) est raccordée à la partie ciselée (11), et la monture (3) est logée dans la partie ciselée principale (15) de la monture (3) suite au pliage de la branche, les deux parois devenant des parois de protection de la monture (3).

4. Lunettes qui peuvent être pliées en forme de boîte selon la revendication 2, dans lesquelles le mécanisme de raccordement rotatif (2) a une première structure (21), une tige de raccordement rotative (22), une deuxième structure (23), une cale de levage (24), un premier ressort (25), une première vis (26), un montant de levage (27), un deuxième ressort (28) et une deuxième vis (29), le premier ressort (25) et la cale de levage (24) sont montés dans une section creuse de la deuxième structure (23) pour comprimer à son tour le premier ressort (25), un côté de la tige de raccordement rotative (22) sur lequel un troisième bloc rotatif (225) est positionné, est monté dans une rainure traversante (232) de la deuxième structure (23), ladite première vis (26) est insérée à travers un trou de positionnement (231) de la deuxième structure (23) et un trou de positionnement (224) de la tige de raccordement rotative (22), ladite première vis (26) permettant de combiner ensemble la tige de raccordement rotative (22), la deuxième structure (23), la cale de levage (24) et le premier ressort (25), et dans lesquelles un premier bloc rotatif (222) sur l'autre côté de la tige de raccordement rotative (22) est monté dans un deuxième trou (212) de la première structure, une grande colonne avant (271) du montant de levage (27) est montée dans un premier trou (211) de la première structure (21), et contre un deuxième bloc rotatif (221) de la tige de raccordement rotative (22), le deuxième ressort (28) et la deuxième vis (29) sont insérés, et le mécanisme de raccordement rotatif (2) devient un tout.

5. Lunettes qui peuvent être pliées en forme de boîte selon les revendications 2 et 4, dans lesquelles les lignes axiales centrales du premier trou (211) et du deuxième trou (212) sont coplanaires, le diamètre du premier trou (211) est monté de manière serrée avec le premier diamètre du mandrin de vis de la deuxième vis (29), une partie avant du montant de levage (27) de ladite grande colonne avant (271), et une partie arrière du montant de levage (27) est une petite colonne (272), et dans lesquelles lorsqu'un côté du premier bloc rotatif (222) de la tige de raccordement rotative (22) est monté dans le deuxième trou (212) de la première structure (21) et que le montant de levage (27) est monté dans le premier trou (211, 213) de la première structure (21), la grande colonne avant (271) du montant de levage (27) est alors contre un deuxième bloc rotatif (221), une distance le long de la diagonale du deuxième bloc rotatif (221) étant inférieure à un diamètre externe du premier bloc rotatif (222), et dans lesquelles le deuxième ressort (28) met en prise avec un manchon la petite colonne (272) du montant de levage (27) lorsqu'elle est montée dans le premier trou (211) de la première structure (21), la deuxième vis (29) est bloquée et la déformation du deuxième ressort est utilisée pour créer la force de rotation qui fait tourner la tige de raccordement rotative (22) et la force de pré-serrage initiale qui est nécessaire lorsque la tige de raccordement rotative (22) est extraite du deuxième trou (212) de la première structure (21).

6. Lunettes qui peuvent être pliées en forme de boîte selon les revendications 2 et 4, dans lesquelles le diamètre externe du premier bloc rotatif (222) est égal à un diamètre du deuxième trou (212), la tige de raccordement rotative (22) est montée avec serrage avec la première structure (21), après avoir été montée dans le deuxième trou (212), et tourne dans le deuxième trou (212), autour du centre du premier bloc rotatif (222), la tige de raccordement rotative (22) a également un bloc rond (223), ledit trou de positionnement (224) est prévu dans le troisième bloc rotatif (225), lorsque la cale de levage (24), le premier ressort (25), la première vis (26) et la deuxième structure (23) sont montés ensemble, ils pivotent autour du trou de positionnement (224).

7. Lunettes qui peuvent être pliées en forme de boîte selon les revendications 2 et 4, dans lesquelles une extrémité de la deuxième structure (23) est prévue avec une rainure de combinaison (234) qui est raccordée à la monture (3), l'autre extrémité est prévue avec un trou (233) et ladite rainure traversante (232) dont le plan axial est le même que celui de la rainure de positionnement (234), ledit trou de positionnement (231) est prévu dans la deuxième structure (23) le long de la ligne centrale qui est verticale par rapport au plan de la rainure traversante (232) et du même côté que la rainure traversante (232), et dans lesquelles le premier ressort (25) est monté dans le trou (233), la cale de levage (24) est montée dans le trou (233), une partie (242) d'une extrémité de la cale de levage (24) est insérée dans le tube du premier ressort (25), et un bloc de positionnement (241) qui peut coulisser de manière transversale dans la rainure traversante (232) est prévu sur l'autre extrémité de la cale de levage (24), et dans lesquelles la cale de levage (24) est comprimée vers le premier ressort, l'extrémité de la tige de raccordement rotative (22) qui a le troisième bloc rotatif (225), est montée dans la rainure traversante (232) de la deuxième structure (23), la deuxième structure (23) est combinée avec la tige de raccordement rotative (22) avec ladite première vis (26) insérée à travers les trous de positionnement (231, 224) et en même temps, la déformation du premier ressort (25) crée la force de pré-serrage initiale et la force d'arrêt qui assemblent la cale de levage (24), le premier ressort (25), la première vis (26) et la deuxième structure (23) et font tourner le tout autour du trou de positionnement (224).

8. Lunettes qui peuvent être pliées en forme de boîte selon les revendications 2 et 4, dans lesquelles la première structure (21) du mécanisme de raccordement rotatif (2) a un premier trou (213), et le deuxième ressort (28) est monté dans le premier trou (213) de la première structure (21), une petite colonne (272) du montant de levage (27) est alors insérée dans le tube du deuxième ressort (28), et lorsque le montant de levage (27) est comprimé vers le bas, le côté de la tige de raccordement rotative (22) qui a le premier bloc rotatif (222), est monté dans le deuxième trou (212) de la première structure (21), la grande colonne avant (271) du montant de levage (27) est contre le deuxième bloc rotatif (221), et la déformation du deuxième ressort (28) provoquée par la pression produit la force de rotation qui fait tourner la tige de raccordement rotative (22) et la force de pré-serrage initiale qui est nécessaire lorsque la tige de raccordement rotative (22) est extraite du deuxième trou (212) de la première structure (21), dans lesquelles le deuxième bloc rotatif (221) devient l'emplacement de butée au niveau duquel le montant de levage (27) et le deuxième ressort (28) sortent du premier trou (213) en raison de la force de rappel initiale.

9. Lunettes qui peuvent être pliées en forme de boîte selon la revendication 2, dans lesquelles la monture (3) comprend des montures (31), un pont (32) et des verres (33).

10. Lunettes qui peuvent être pliées en forme de boîte selon la revendication 2, dans lesquelles le mécanisme de raccordement rotatif (2) a un emplacement de butée selon un angle déterminé, lorsque les branches sont pliées, le mécanisme possédant la force de tension qui tire les branches vers la position de la monture.
